# EUROPEAN PATENT APPLICATION

(11) **EP 1 783 636 A1**
(43) Date of publication of application: **09.05.2007**
(21) Application number: 05780909.7
(22) Date of filing: 24.08.2005
(51) Int. Cl.: G06F 17/30, H04N 5/225, H04N 5/76

(54) **IMAGE DISPLAY, IMAGE DISPLAYING METHOD, AND COMPUTER PROGRAM**

(30) Priority: 24.08.2004 JP 2004243490
(71) Applicant: SONY CORPORATION, Minato-ku Tokyo (JP)
(72) Inventor: OZAKI, Koji Sony Corporation, Tokyo 108-0075 (JP)
(74) Representative: Tyson, Robin Edward
(86) International application number: PCT/JP2005/015336
(87) International publication number: WO 2006/022289

(57) **Abstract**

There is provided an image display apparatus for displaying existing image data formed of a still image and a moving image, including a data group specifier 122 configured to specify an image data group that is a group of pieces of the image data in response to a request from a user; a group generator 124 configured to group pieces of image data for each of which the time intervals between image-capturing start dates and times or storage start dates and times are within a predetermined time interval in the specified image data group; a representative image data selector 126 configured to select, as representative image data, at least one piece of image data in the group generated by the group generator; and an image data display section 128 configured to display representative image data for each of the groups as a thumbnail on a display section.

## Description

### Technical Field

The present invention relates to an image display apparatus for displaying existing image data, an image display method for use therewith, and a computer program for use therewith.

### Background Art

In the related art, electronic data, such as still images and moving images captured by an image-capturing device such as a digital camera, is stored temporarily on a storage medium. When a user wishes to view the image data, it has been necessary to sequentially view thumbnails of image data one by one. Consequently, it takes a long time to locate target image data, depending on the number of pieces of image data.

When a large amount of image data is to be handled, it has been possible for a user to manually separate captured image data into a plurality of folders so as to be managed.

There is a known image reading and storage apparatus in which image data that is chronologically successive, constituting captured film images and digital images, is grouped into an image data group in which an image-capturing time interval is within a range of predetermined values when image capturing is performed and the image data is stored in each storage area (for example, Japanese Unexamined Patent Application Publication No. 2000-339344). Similarly to the above, a technology is also known in which, when image data is to be stored, a time interval of an image-capturing unit is compared with a predetermined time interval, and the moving image data is grouped together (for example, Japanese Unexamined Patent Application Publication No. 2001-177789).

To perform such grouping, it is necessary to set a predetermined value of a time interval in advance before an image is captured, and the time interval cannot be changed to an appropriate time interval while images are being stored. Furthermore, folders and the like need to be provided to store grouped image data. When grouping is performed once and storage of the grouped image data is completed, it is difficult to change the units of grouping. Therefore, when a user wishes to view target image data, a user is required to sequentially view image data of the group that is often a size not intended.

### Disclosure of Invention

### Problems to be Solved by the Invention

The present invention has been made in view of the above-described problems presented by grouping image data at image-capturing time in the related art. It is an object of the present invention to provide a new and improved image display apparatus capable of forming an appropriate group of images at display time even when the images are not grouped together in the state of being stored and capable of extracting target image data in a short time and easily, an image display method for use therewith, and a computer program for use therewith.

### Means for Solving the Problems

In order to solve the above-described problems, according to a first aspect of the present invention, there is provided an image display apparatus for displaying existing image data formed of a still image and a moving image, the image display apparatus including: a data group specifier configured to specify at least one of image data groups that are groups of pieces of the image data in response to a request from a user; a group generator configured to group pieces of the image data for each of which image-capturing start date and time or storage start day and time is within a predetermined time interval in the specified image data group; a representative image data selector configured to select at least one piece of image data in the group generated by the group generator as representative image data; and an image data display section configured to display representative image data for each of the groups as a thumbnail on a display section.

The image display apparatus can be implemented by a digital still camera, a digital video camera, an image viewer, a personal computer, a game machine, a television, a telephone, a PDA (Personal Digital Assistant), an image storage device, a car navigation system, a portable terminal, and the like. Furthermore, the representative image data selector may select any image data of first, intermediate, and final image data when the image data in the group is arranged in chronological order.

In the present invention, image data for which time intervals between image-capturing start dates and times or storage start dates and times are within a predetermined time interval is assumed to constitute image data that is captured or stored in the same environment or situation, and the image data is grouped together. Since such grouping is performed at the time of display, image data does not need to be grouped in advance in a state in which the image data is stored (no pre-processing is needed), and grouping in response to a user's request at the time of display can be performed. For example, when an image data group is to be specified, since the total number of pieces of image data is known, it is possible to change the size of the group on the basis of a predetermined time interval in accordance with this total number.

The image display apparatus may further include a group selector configured to select a group to which the representative image data displayed on the display section belongs in response to a request from the user, wherein, after the group is selected, the group generator may shorten the predetermined time interval at a predetermined ratio and may newly perform grouping in the selected group on the basis of the shortened predetermined time interval, and the image data display section displays representative image data for each of the newly formed groups as a thumbnail on the display section. When representative image data formed of one piece of still image data or moving image data is finally selected, if it is still image data, a still image is closed up and displayed, and if it is moving image data, the moving image data is reproduced (i.e., frames of the moving image data are displayed).

With such a configuration, it becomes possible to form the above-described groups as a hierarchy on the basis of the magnitude of the predetermined time interval, and it becomes possible to select groups in a lower hierarchical level one after another and to locate target image data in a short time.

Furthermore, for example, in response to a user pressing a button corresponding to an operation of "Return", it is possible to move (return) the focus from the current lower hierarchical level to a higher hierarchical level. At this time, it may be assumed that the predetermined time interval used in the higher hierarchical level is stored.

The image display apparatus may further include an interval setter for setting the predetermined time interval in response to a request from the user. The group generator can also perform grouping again on the basis of the set predetermined time interval.

When grouping is performed not as intended on the basis of a preset predetermined time interval, it is possible to reset the predetermined time interval while referring to a list of images. Furthermore, since the predetermined time interval can be set according to an application, such as when broad grouping or fine grouping is desired, it is possible to perform group display for a user in a way that is easy to understand.

The image display apparatus may further include an image-capturing section for capturing a still image or a moving image, and zoom keys or direction keys used for image capturing. It is also possible for the interval setter to change the predetermined time interval by using the zoom keys or the direction keys. For example, when one of the zoom keys is to be used, the predetermined time interval may be set shorter when the zoom key is set on the tele side, and the predetermined time interval may be set longer when the zoom key is set on the wide side.

With such a configuration, it is possible to efficiently use the zoom keys or the direction keys, and it is not necessary to separately provide a key for setting a predetermined time interval.

The image display apparatus may further include an interval display section configured to display the set predetermined time interval. Such a display may be a numeral directly indicating a predetermined time interval or may be a diagram, such as a bar display indicating a predetermined time duration in an intuitively understandable manner.

With such a configuration, it is possible for the user to change a predetermined time interval by using the interval setter while confirming the predetermined time interval.

When the image data constitutes a moving image, the group generator may group at least one of the still images constituting the moving image as image data, and may also divide the moving image into frames every predetermined time interval and may group still images constituting the divided moving image as image data in each of the divided frames.

With such a configuration, the moving image can be handled as a still image. Even when still image data and moving image data coexist in an image data group, thumbnails can be displayed in the same manner in which the still image data is displayed. On the basis of the configuration for division into frames, even if there is moving image data for a long time, reference can be made to an image in the middle of the moving image data, and it becomes possible to easily locate a target scene. For example, when a plurality of scenes exist in a series of moving images, a still image for each of the scenes can be referred to, and it becomes easy to find a desired scene.

The image display apparatus may further include a position display section configured to display a position and a ratio in the image data group or the group of a plurality of pieces of representative image data displayed on the display section. The position and the ratio may be displayed using a scroll bar or may be displayed using a numeral.

The image display apparatus may further include an image data storage section for storing the image data. The data group specifier can also specify all the image data in the image data storage section or all the image data in any folder provided in the image data storage section as an image data group. With such a configuration, it becomes possible for the user to store image data sequentially in the image data storage section or in one folder of the image data storage section without being concerned with the image capturing or storage date and time, and the like.

It is also possible for the image data display section to display the representative image data and also one or more pieces of information selected from the total time of the group to which the representative image data belongs, the total number of pieces of image data, a group icon, and group information. With such a configuration, it is possible for a user to easily understand each displayed group, and it becomes easier for the user to locate target image data.

In order to solve the above-described problems, according to a second aspect of the present invention, there is provided an image display apparatus in which the group generator groups pieces of image data for each of which the time interval from image-capturing end date and time or storage end date and time to image-capturing start date and time or storage start date and time of the consecutive image data in the specified image data group is within a predetermined time interval.

With such a configuration, grouping can be performed only on the basis of the true time interval among image data regardless of the time duration of moving image data. Thus, it is possible to avoid a situation in which pieces of image data, which are actually close to each other, for which time intervals between image-capturing or storage start times are apart, are allocated to different groups.

In order to solve the above-described problems, according to a third aspect of the present invention, there is provided an image display apparatus in which the group generator groups a series of pieces of image data for each of which image-capturing start date and time or storage start date and time is within a predetermined time interval range.

With such a configuration, it is possible to manage pieces of image data obtained within a certain time interval range as one group, and it is possible to intentionally collect image data within any time interval range.

In order to solve the above-described problems, according to a fourth aspect of the present invention, there is provided an image display apparatus in which the group generator groups pieces of image data for each of which the image-capturing position or storage position is within a predetermined position range in a specified image data group. The measurement of such a position is made possible by a position measurement system such as a GPS (Global Positioning System).

With such a configuration, it is possible to manage pieces of image data for each of which the image-capturing positions or storage positions are the same, that is, pieces of image data that are captured or stored in the same environment or situation, as the same group. Thus, searching for image data on the basis of position is made easier.

In order to solve the above-described problems, according to a fifth aspect of the present invention, there is provided an image display apparatus in which the group generator groups pieces of image data for each of which the image-capturing altitude or the storage altitude is within a predetermined altitude range in a specified image data group. The measurement of the altitude is made possible by a position measurement system, such as GPS, similarly to that described above.

With such a configuration, it is possible to manage, as the same group, pieces of image data for each of which the image-capturing altitudes or the storage altitude are the same, that is, pieces of image data that is captured or stored in the same environment or situation. Thus, searching for image data by an altitude, for example, photographs taken when climbing a mountain, is made easier.

In order to solve the above-described problems, according to a sixth aspect of the present invention, there is provided an image display apparatus in which a group generator groups pieces of image data for which movement speeds of the image-capturing device when the image was captured or stored are within a predetermined speed range. Such a movement speed can be calculated on the basis of a position and a time by a position measurement system such as GPS, similarly to that described above.

With such a configuration, it is possible to manage, as the same group, image data that is captured or stored in the same situation. Thus, searching for target image data is made easier by a group, such image data being obtained when stationary, on foot, moving by car, or moving on a bullet train.

The invention according to the second to sixth aspects can be provided with components described in the first aspect similarly to the invention according to the first aspect.

A computer program that functions as the image display apparatus, and an image display method for displaying existing image data formed of a still image and a moving image are also provided.

As described in the foregoing, according to the present invention, even if image data has not been grouped or processing associated with the grouping has not been performed in advance while the image data was being stored, image data is displayed in such a manner as to be appropriately grouped, and it is possible for the user to locate target image data in a short time and easily. That is, even when an image data group contains a large amount of image data, since a hierarchical structure of two or more levels can be provided at the time of display, it is possible to easily extract target image data from a small amount of representative image data. Furthermore, the user can change the predetermined time interval any number of times until image data is divided into desired groups, and searching for image data is made easier.

Such efficient grouping enables a reduction in the number of pieces of the representative image data to be displayed on the display section, the time required to read the image data can be reduced, and the power consumption can be reduced.

### Brief Description of the Drawings

Fig. 1 is a block diagram schematically showing an image display apparatus according to this embodiment.
Fig. 2 is a perspective view showing the exterior of a digital camera serving as an image display apparatus.
Fig. 3 is a block diagram schematically showing functions of a digital camera.
Fig. 4 is an exterior view showing a display screen of image data in a related art.
Fig. 5 is a list of image data groups that can be displayed on the display screen of Fig. 4.
Fig. 6 is a list of image data groups that can be displayed on a display section in this embodiment.
Fig. 7 is an exterior view showing the screen of a display section of the image display apparatus according to this embodiment.
Fig. 8 is a list illustrating subdivision of an image data group.
Fig. 9 is an exterior view showing a new screen of a group selected by a group selector.
Fig. 10 is an exterior view showing a new screen of a group selected by a group selector.
Fig. 11 is an exterior view showing a screen when a position display section displays a current display position and ratio in the group.
Fig. 12 is a list of image data groups that can be displayed on a display section.
Fig. 13 is an exterior view showing the screen of a display section.
Fig. 14 is a list of image data groups that can be displayed on a display section.
Fig. 15 is an exterior view showing the screen of a display section.
Fig. 16 is an exterior view showing the screen of a display section when a two-level hierarchy is displayed.
Fig. 17 is an exterior view showing the screen of a display section when a two-level hierarchy is displayed.
Fig. 18 is a flowchart showing in detail an image display method according to this embodiment.
Fig. 19 is a list of image data groups that can be displayed on a display section.
Fig. 20 is an exterior view showing the screen of a display section of an image display apparatus according to this embodiment.
Fig. 21 is a list of image data groups that can be displayed on a display section.
Fig. 22 is an exterior view showing the screen of a display section of an image display apparatus according to this embodiment.
Fig. 23 is a list of image data groups that can be displayed on a display section.
Fig. 24 is an exterior view showing the screen of a display section of an image display apparatus according to this embodiment.
Fig. 25 is a list of image data groups that can be displayed on a display section.
Fig. 26 is an exterior view showing the screen of a display section of an image display apparatus according to this embodiment.
Fig. 27 is a list of image data groups that can be displayed on a display section.

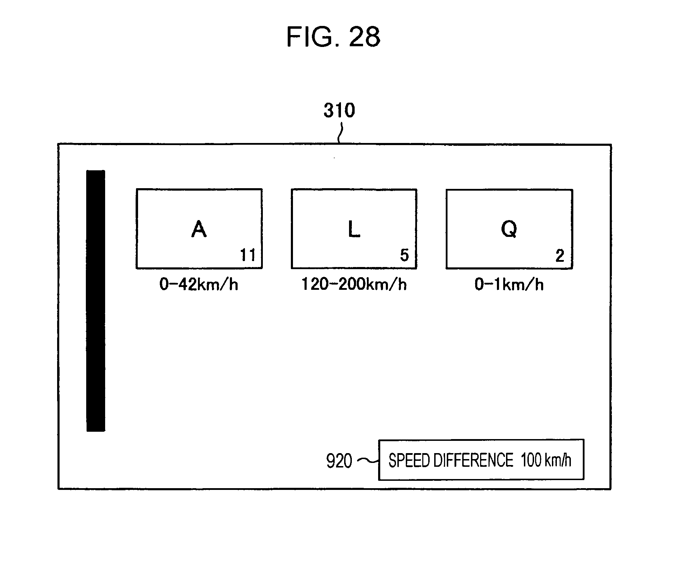

Fig. 28 is an exterior view showing the screen of a display section of an image display apparatus according to this embodiment.

### Best Mode for Carrying Out the Invention

Preferred embodiments of the present invention will be described below in detail with reference to the attached drawings. In this specification and the drawings, components having substantially the same functional configuration are designated with the same reference numerals, and duplicate descriptions are omitted.

### (First Embodiment: Image Display Apparatus)

An image display apparatus according to this embodiment is configured so that image data that is considered to have been captured or stored in the same environment or situation, such as when, for example, the time interval between image-capturing start dates and times or storage start dates and times is within a predetermined time interval, from among a group of image data that has already been captured or stored, is grouped at the time of display or search, and target image data can be easily located in a short time.

The image display apparatus can be implemented by a digital still camera (digital camera), a digital video camera, an image viewer, a personal computer, a game machine, a television, a telephone, a PDA (Personal Digital Assistant), an image storage device, a car navigation system, a portable terminal, and the like. It is assumed that, in this embodiment, the image display apparatus is implemented by, in particular, a digital camera, but the image display apparatus is not limited to a digital camera.

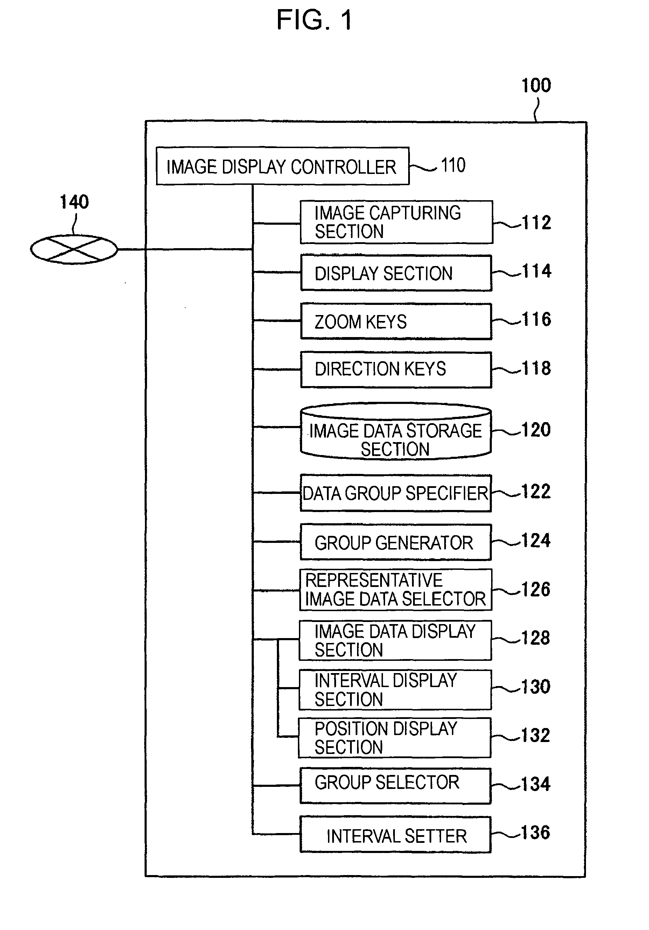

Fig. 1 is a block diagram schematically showing an image display apparatus 100 according to this embodiment. The image display apparatus 100 includes an image display controller 110, an image-capturing section 112, a display section 114, zoom keys 116, direction keys 118, an image data storage section 120, a data group specifier 122, a group generator 124, a representative image data selector 126, an image data display section 128, an interval display section 130, a position display section 132, a group selector 134, and an interval setter 136.

The image display controller 110 manages and controls the entire image display apparatus 100 by using a semiconductor integrated circuit including a central processing unit (CPU).

When the image display apparatus 100 is, for example, a digital camera, the image-capturing section 112 captures a still image or a moving image as an image-capturing object.

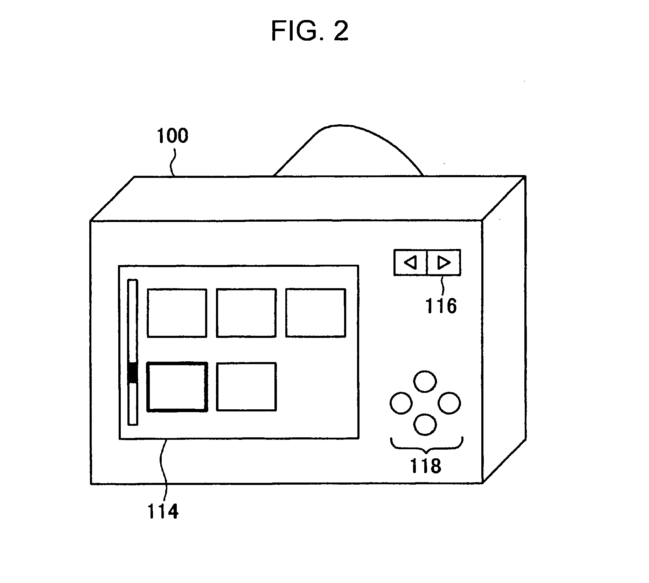

Fig. 2 is a perspective view showing the exterior of a digital camera such as the image display apparatus 100. The image-capturing section 112 is incorporated in the digital camera and mainly captures a still image via a lens provided on the image-capturing side.

The display section 114 displays an image captured by the image-capturing section 112 or an image that is captured and temporarily stored in the digital camera, so that the image can be confirmed. In the image display apparatus 100 such as a digital camera, the area that can be occupied by the display section 114 is reduced in response to the miniaturization of such an apparatus, making it difficult to confirm many images at one time. Therefore, there is a demand for display of image data effectively using a small display area.

The digital camera is also provided with zoom keys 116 and direction keys 118 that can also be used as the zoom keys 116 or used alone. Such zoom keys 116 and direction keys 118 are also able to generate a signal for increasing or decreasing a predetermined time interval for an interval setter 136 (to be described later).

The image data storage section 120 stores one or more pieces of image data. The image data may be stored in the image data storage section 120 in a non-orderly manner, and it does not matter whether or not the image data is allocated to folders or the like. Therefore, there is no need to group pieces of image data in advance and to create folders or the like.

The data group specifier 122 specifies an image data group, which is a group of image data, in response to a request from a user. The data group specifier 122 may specify, as an image data group, all the image data in the image data storage section 120 and may specify, as an image data group, all the image data in any of one or more folders provided in the image data storage section 120. Furthermore, a plurality of pieces of image data stored in an external server of a provider or the like can also be specified as an image data group by using a communication network 140 such as the Internet.

The group generator 124 groups a series of pieces of image data in which the time intervals between the image-capturing start dates and times or the storage start days and times are within a predetermined time interval in the image data group specified by the data group specifier 122. For example, when the predetermined time interval is set as 10 minutes, the image-capturing start dates and times or the storage start dates and times are arranged in chronological order, and image data in which the time interval between the consecutive image data is within 10 minutes is grouped together by assuming that the images have been captured or stored in the same environment or situation.

The representative image data selector 126 selects, as representative image data, at least one piece of image data within the group generated by the group generator 124. At this time, if the image data is still image data, the representative image data selector 126 can set the still image as representative image data, and if the image data is moving image data, the representative image data selector 126 can set any still image at the start, at a midpoint, or at the end as representative image data. Furthermore, it is also possible that the user specifies in advance a still image in any point of moving image data and the still image is made to be representative image data. In addition, representative image data may be set by using various methods available in the related art.

The image data display section 128 displays as many of the groups formed by the group generator 124 as possible on the display section 114. In practice, the representative image data selected by the representative image data selector 126 for each group to be displayed is displayed as thumbnails showing the content of each group.

The interval display section 130 displays the set predetermined time interval that becomes a key for the grouping on the display section 114. Such a display may be performed using a numeral directly indicating the predetermined time interval or may be performed using a diagram, such as a bar display intuitively indicating the predetermined time duration.

The position display section 132 displays, on the display section 114, the position and the ratio of a predetermined number of pieces of representative image data displayed on the display section 114 with respect to the image data group or the group. The position and the ratio may be displayed using a scroll bar or may be displayed using a numeral.

The group selector 134 selects a group to which the representative image data belongs in response to a request from the user. That is, the user selects desired representative image data from the display section 114, and in response to the request from the user, the group selector 134 selects a group to which the selected representative image data belongs. When a specific group is selected by the group selector 134, the group generator 124 shortens the predetermined time interval at a predetermined ratio. For example, when the preset predetermined time interval is 10 minutes and the predetermined ratio is 1/2, a new predetermined time interval becomes 5 minutes. Then, all the image data in the selected group is newly grouped on the basis of the new predetermined time interval. Thereafter, the image data display section 128 displays, as a thumbnail, the representative image data for each group, which is newly grouped by the group generator 124. In the manner described above, as a result of forming groups to be displayed as a hierarchy on the basis of the magnitude of the predetermined time interval and selecting groups in lower hierarchical levels one after another, it is possible to locate target image data at an early time.

In response to a request from the user, the interval setter 136 sets a predetermined time interval, which is a reference for grouping by the group generator 124. The group generator 124 newly performs grouping on the basis of the predetermined time interval that is newly set by the interval setter 136. By resetting the predetermined time interval in this manner, it is possible to perform grouping desired by the user. As specific operation, for example, when one of the zoom keys set on the tele side 116, shown in Fig. 2, is used, the predetermined time interval, which was 10 minutes at first, becomes shorter as 8 minutes and 6 minutes. When the zoom key 116 is set on the wide side, the predetermined time interval becomes longer conversely to that on the tele side. The grouping to be performed once again by the group generator 124 may be performed in real time in response to such a continuous predetermined time interval change.

### (Digital Camera)

Next, with reference to an electrical flow, a description will be given of processing performed by a digital camera 200 serving as the image display apparatus 100 from image capturing to display of image data.

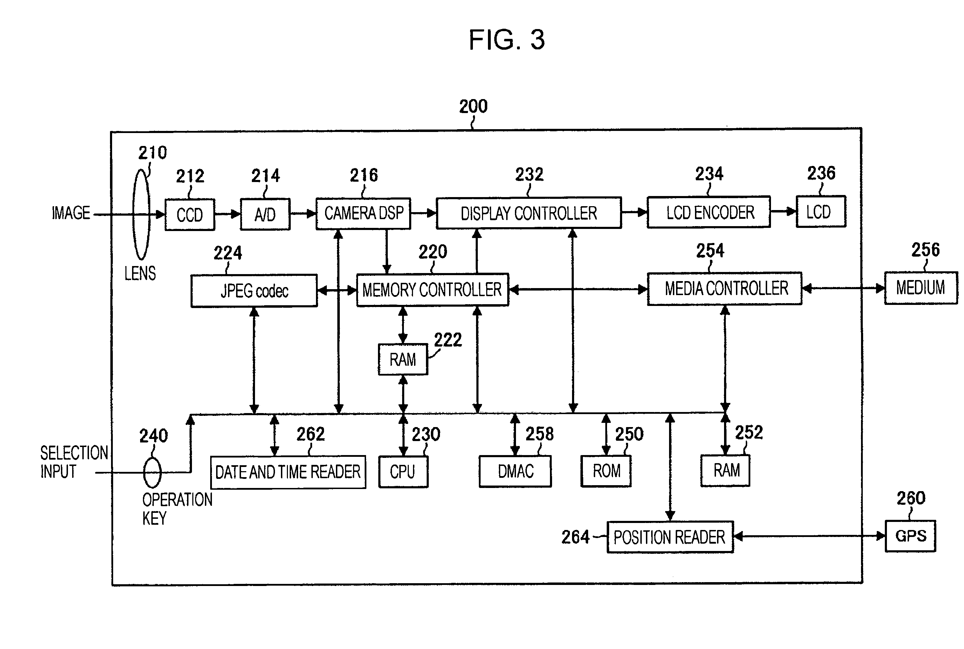

Fig. 3 is a block diagram schematically showing functions of the digital camera 200. First, the user obtains an analog image data signal by using a CCD (Charge Coupled Device) 212 through a lens 210 of the digital camera 200. Next, the analog image data signal is converted into a digital image data signal by an A/D converter 214. The image data signal extracted in this manner is stored as image data in a camera DSP (Digital Signal Processor) 216 and is stored in a RAM 222 by a memory controller 220. At this time, the image data may be compressed or decompressed by a JPEG codec 224 or the like.

A CPU 230 processes or moves the above-described image data. For example, the CPU 230 instructs a display controller 232 to display the image data, so that the display controller 232 displays the image data on an LCD 236 serving as the display section 114 via an LCD (Liquid Crystal Display) encoder 234. At this time, an image compressed by the JPEG codec 224 may be displayed. Furthermore, the CPU 230 can also select a desired image and expand or reduce image data in response to a selection input by the user using an operation key 240.

The CPU 230 is initiated by a program stored in a ROM 250, and executes an application by using a memory area of a RAM 252. Furthermore, the CPU 230 can also access a medium 256 via a media controller 254. There are cases in which data exchange is directly performed between memories by using a DMAC (Direct Memory Access Controller) 258 without the intervention of the CPU 230.

Furthermore, the CPU 230 performs functions of the data group specifier 122, the group generator 124, the representative image data selector 126, the image data display section 128, the interval display section 130, the position display section 132, the group selector 134, the interval setter 136, and the like. Data of date and time necessary for the group generator 124 and the like, and data of the image-capturing position or the storage position using a GPS 260 are obtained from the date and time reader 262, the position reader 264, and the like. Another detector for obtaining information on image capturing and storage may be provided.

### (Display of Image Data)

Next, a specific description will be given below of the display of image data or representative image data.

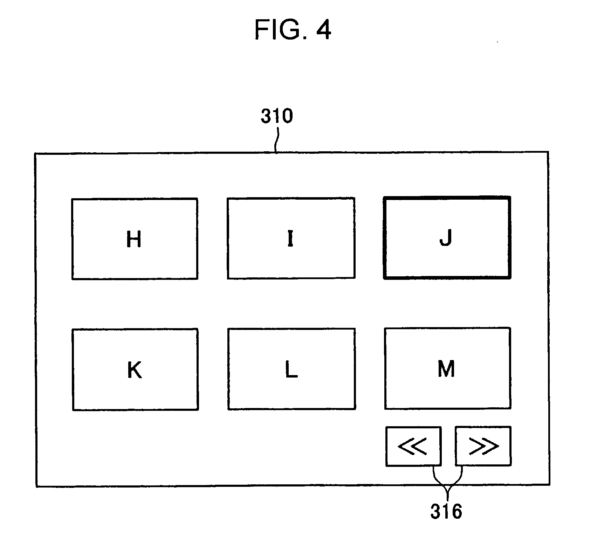

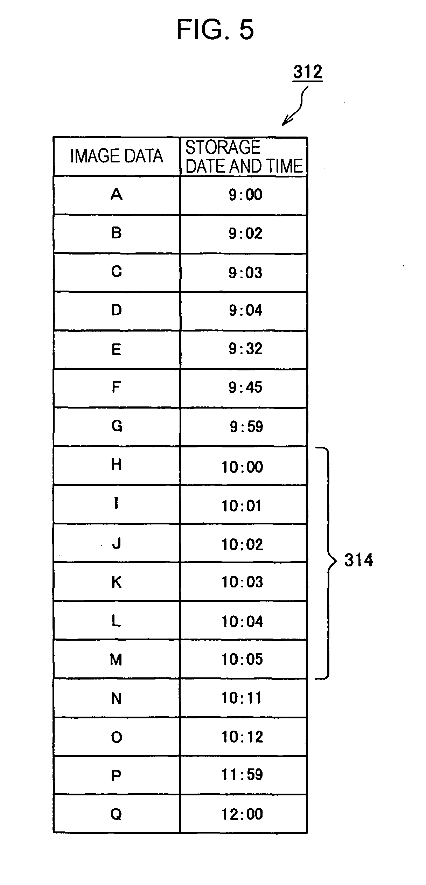

Fig. 4 is an exterior view showing a display screen 310 of image data in the related art. Fig. 5 is a list of image data groups that can be displayed on the display screen 310. It is possible for the display image 310 to display six pieces of image data extracted from the image data group list 312 shown in Fig. 5. The image data group list 312 is consecutively arranged in chronological order.

On the display screen 310, the image data in a display range 314 within the image data group list 312 shown in Fig. 5, that is, six pieces of image data H to M, are displayed. When desired image data does not exist on the display screen 310, it is possible to move the display range 314 of the image data in the image data group list 312 back and forth by depressing a skip button 316.

In the related art, when the user searches for desired image data, the display range 314 of the display screen 310 is moved back and forth, and pieces of image data in the image data group list 312 are viewed one by one. Therefore, when image data in the vicinity of the 500th piece of image data or thereabouts is going to be displayed when, for example, 1000 pieces of image data are stored, it is necessary for the user to scroll the display range many times. Furthermore, although the image data to be displayed is displayed in the form of thumbnails having a reduced number of pixels, when scrolling is performed many times in this manner, the time interval required for reading image data from the storage medium is nonnegligible.

When image data is to be displayed, in the image display apparatus 100 in this embodiment, first, the data group specifier 122 specifies an image data group such as that shown in Fig. 5. The group generator 124 compares the image data of the specified image data group and groups a series of image data for each of which the time interval between the storage dates and times is within a predetermined time interval. Here, processing is performed by setting the predetermined time interval as 10 minutes.

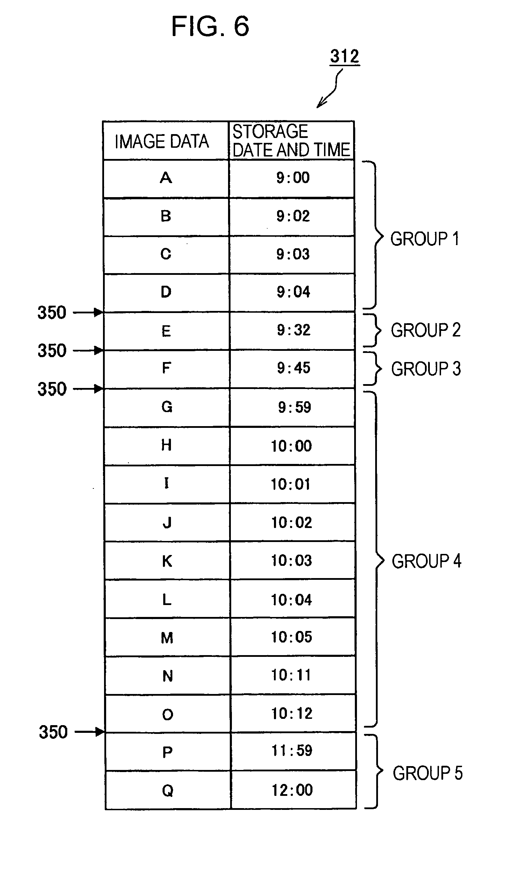

Fig. 6 is a list of image data groups that can be displayed on the display section 114 similarly to that of Fig. 5. It can be seen from the image data group list 312 that the image data is consecutively arranged in chronological order and the time intervals between the storage dates and times of the image data are known from the storage date and time attached to each image data. Here, the predetermined time interval for the object of comparison is 10 minutes, and the place at which the time interval between consecutive image data is greater than or equal to 10 minutes is set as a group division point.

In the image data group list 312 of Fig. 6, there are four places 350 at which the time intervals between the storage dates and times are greater than or equal to 10 minutes, that is, between the image data DE, between the image data EF, between the image data FG, and between the image data OP. If the places are set as division points of image data groups, the group generator 124 can generate 5 groups, that is, image data A to D (group 1), image data E (group 2), image data F (group 3), image data G to O (group 4), and image data PQ (group 5).

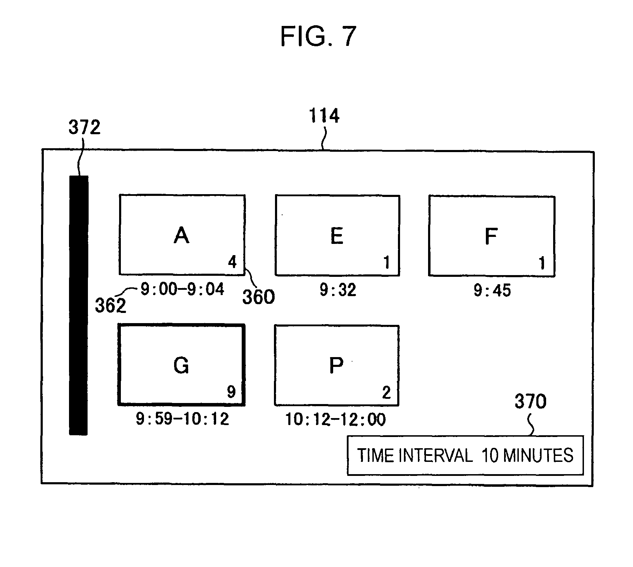

Fig. 7 is an exterior view showing the screen of the display section 114 of the image display apparatus 100 according to this embodiment. The representative image data selector 126 of the image display apparatus 100 selects at least one piece of image data from each group, which is grouped by the group generator 124 as representative image data. Here, the image data at the start when the image data is arranged in chronological order among the image data in each group is selected as representative image data. Therefore, the image data is arranged, from the upper left of the display section 114, in the order of the image data A, the image data E, the image data F, the image data G, and the image data P. The image data for which the time interval at which the data is arranged in the same group is short often has a strong correlation. As a result of the above-described display, even if a large number of image data exist in an image data group, it becomes possible to understand the entirety thereof by only displaying a small number of representative image data.

In the lower right of the displayed representative image data, a total number 360 of the image data belonging to the group is also displayed. Below the representative image data, a total time 362 of the group, for example, 9:00 - 9:04, which is the total time of the image data A to D, is displayed in the case of group 1. In addition, a group icon such that a group is abstracted, group information indicating the outline of the group, and the like can also be displayed.

In addition, in the lower right of the display section 114, a current value 370 of the predetermined time interval that is set in advance or reset by the interval setter 136 is displayed. In the left side of the display section 114, the position display section 132 allows the display of a scroll bar 372 indicating the current display position and ratio in the image data group or the group. In the example of Fig. 7, since the displayed groups extend over the image data groups, the scroll bar 372 shows the entire area. The position and the ratio may be displayed using a scroll bar or may be displayed using a numeral.

Next, in order to obtain desired image data, in response to a request from the user, the group selector 134 selects the group that is considered to contain the image data from the display section 114. For example, in Fig. 7, when the representative image data G, that is, the group 4 formed of 9 pieces of image data of the image data group list 312 shown in Fig. 6, is selected, the group generator 124 shortens the predetermined time interval of 10 minutes at a predetermined ratio of 1/2, and divides the group 4 into smaller groups by using the new predetermined time interval of 5 minutes as a reference. Then, the image data display section 128 displays the new representative image data for each of the subdivided groups as a thumbnail on the display section 114.

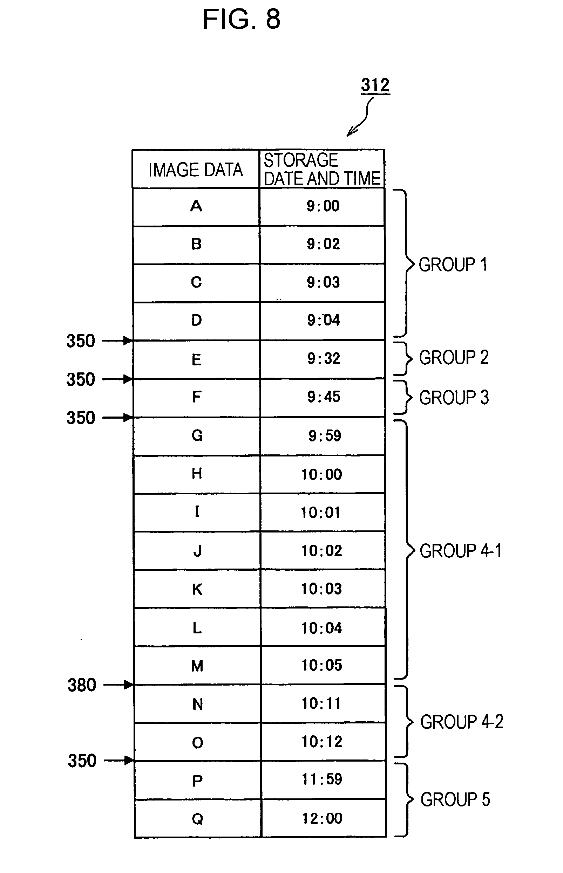

Fig. 8 is a list illustrating the subdivision of the image data group shown in Fig. 6. The image data G to O in the image data group list 312 of Fig. 6, that is, group 4, is such that the image data for which time intervals between the storage dates and times are within 10 minutes is grouped. In Fig. 8, since the predetermined time interval to be compared with the storage date and time interval has been changed to 5 minutes, a new division point 380 is detected as a consequence of the change, and two groups, that is, a group 4-1 and a group 4-2, are further generated from the group 4.

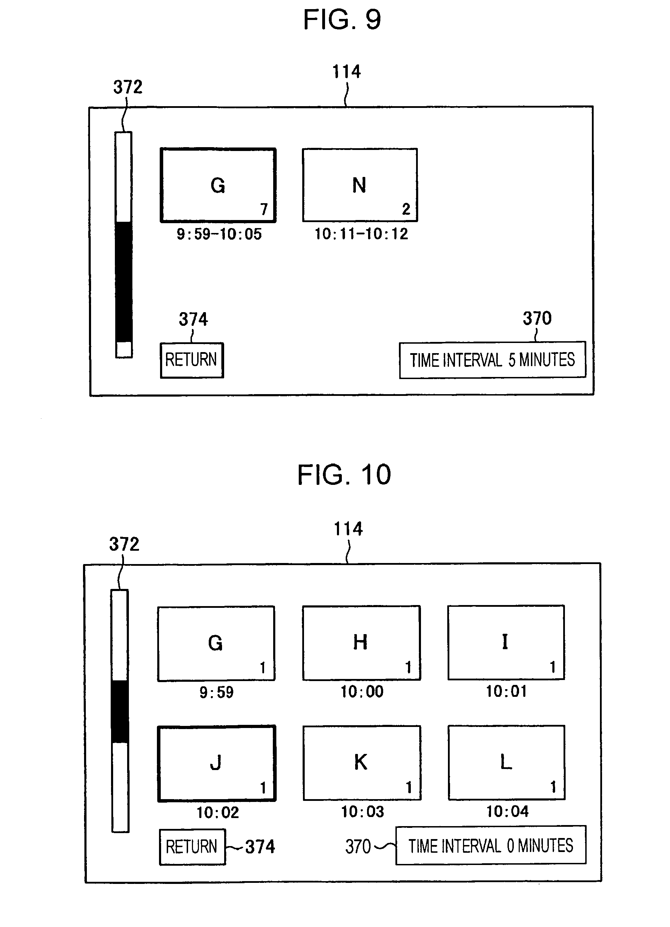

Fig. 9 is an exterior view showing a new screen of the group selected by the group selector 134. The representative image data selector 126 of the image display apparatus 100 selects, as representative image data, at least one piece of the image data from each group such that the group selected by the group selector 134 is subdivided further. Here, also, the image data at the start when the image data is arranged in chronological order among the image data in each group is selected as representative image data. Therefore, from the upper left of the display section 114, the image data is arranged in the order of the image data G and the image data N. The image data in the group that is subdivided on the basis of the predetermined time interval of 5 minutes has a stronger correlation, such as the same subject being captured in the same situation.

Here, in the lower right of the display section 114, a current value 370 of the predetermined time interval that is newly set by the interval setter 136 is displayed. In the left side of the display section 114, the position display section 132 allows the display of a scroll bar 372 indicating the current display position and ratio in the image data group. Furthermore, in response to the user operating a button of, for example, "Return" 374, it is possible to move (return) the focus from the current lower hierarchical level to a higher hierarchical level. At this time, in order to correctly restore the grouping in the higher hierarchical level, the predetermined time interval used in the higher hierarchical level is stored.

Next, a group that is considered to contain desired image data is further selected from the display section 114. For example, when a group displayed in such a manner that image data G in Fig. 9 is displayed as representative image data, that is, the group 4-1 formed of 7 pieces of image data of the image data group list 312 of Fig. 8, is selected, the group generator 124 shortens the predetermined time interval of 5 minutes at a predetermined ratio of 1/2, and subdivides the group 4-1 into further smaller groups by using the new predetermined time interval of 2.5 minutes. Here, since the group 4-1 contains only 7 pieces of image data, the predetermined time interval automatically becomes 0 minutes, and the image data display section 128 displays all the image data contained in the group 4-1. Whether the predetermined time interval is set as 2.5 minutes or whether the predetermined time interval is forcedly set as 0 minutes in accordance with the number of pieces of image data can be set as desired in accordance with a program of the image display apparatus 100.

Fig. 10 is an exterior view showing a new screen of the group selected by the group selector 134. The representative image data selector 126 of the image display apparatus 100 selects the image data of each group such that the group selected by the group selector 134 is further subdivided, here, all the image data contained in the group 4-1. Therefore, from the upper left of the display section 114, the image data is arranged in the order of image data G, image data H, image data I, image data J, image data K, and image data L.

Here, in the lower right of the display section 114, a current value 370 of the predetermined time interval that has been newly set by the interval setter 136 is displayed. In the left side of the display section 114, the position display section 132 allows the display of the scroll bar 372 indicating the current display position and the current ratio in the image data group. Here, the position display section 132 displays the current display position and the current ratio in the image data group, and of course, can also display the current display position and the current ratio in the group.

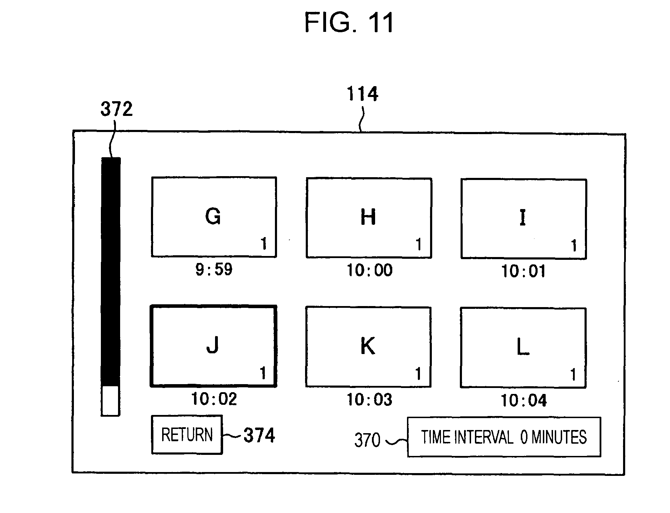

Fig. 11 is an exterior view showing a screen when the position display section 132 displays the current display position and the current ratio in the group. The group 4-1 selected by the group selector 134 contains 7 pieces of image data, and only up to 6 thumbnails can be displayed on the display section 114. Therefore, the image data to be displayed is limited. As shown in Fig. 11, even if the entire group 4-1 is displayed using the scroll bar 372, it is possible to confirm the display position and the ratio.

Then, when each image data is displayed as described above, it becomes possible to select desired image data from within it. When representative image data formed of one still image data or moving image data is finally selected, if it is still image data, a still image is zoomed in for close up, and if it is moving image data, the moving image data is reproduced (including the reproduction of the moving image data for each frame).

Next, a description will be given of display of image data when a moving image is contained in an image data group. For processing image data in the case of the moving image, two handlings are considered. One handling is to carry out this embodiment by assuming the entire moving image as one still image. Another handling is to carry out this embodiment in such a manner that the entire moving image is first divided every predetermined time interval, that is, is divided into frames having a predetermined time duration, and the moving image for divided frames is assumed as one still image. When the divided frame is finally selected, the image data may be reproduced for the amount of time of the frames, or the first frame up to the end of the entire moving image may be reproduced.

Therefore, when the image data is a moving image, the group generator 124 may group pieces of image data by assuming that at least one still image of the moving image as image data. Also, the group generator 124 may group pieces of image data by dividing the moving image every predetermined time interval and by assuming that at least one still image of the divided moving image as image data in each divided frame.

With such a configuration, a moving image can be handled as a still image, and even when still image data and moving image data coexist in an image data group, thumbnails can be displayed in the same manner in which the still image data is displayed. Furthermore, the configuration for division into frames makes it possible to easily locate a target scene even if there is moving image data for a long time.

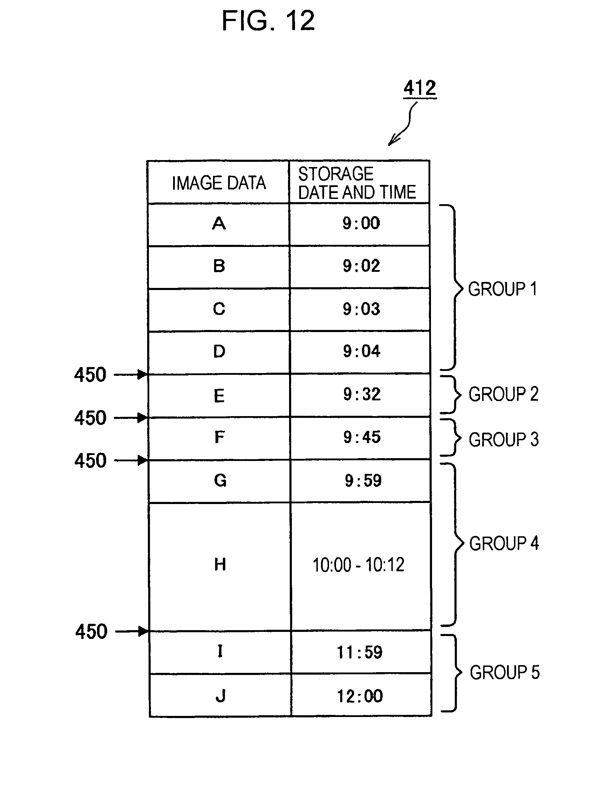

Fig. 12 is a list of image data groups that can be displayed on the display section 114. An image data group list 412 contains image data H formed of moving images. The image data is arranged consecutively in chronological order, and the time interval between storage dates and times of the image data is known from the storage date and time attached to each image data. Here, the predetermined time interval for the object of comparison is 10 minutes.

In the case of the image data group list 412 shown in Fig. 12, processing for the image data of the moving image proceeds by assuming the entirety thereof as one still image regardless of the time duration of the moving image.

As described above, it can be seen that there four places 450 at which the time interval between the storage dates and times are 10 minutes or more, that is, between the image data DE, between the image data EF, between the image data FG, and between the image data HI. When places are set as the division points of the image data group, it is possible for the group generator 124 to generate five groups of image data A to D (group 1), image data E (group 2), image data F (group 3), image data GH (group 4), and image data IJ (group 5). The image data H is assumed as a still image for the sake of convenience in the grouping, but actual reproduction is not performed as a still image.

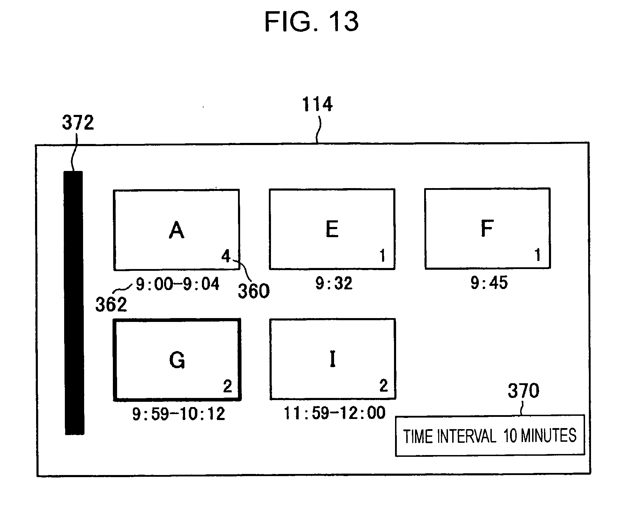

Fig. 13 is an exterior view showing the screen of the display section 114. The representative image data selector 126 selects, as representative image data, at least one piece of image data from each group, which is grouped by the group generator 124 in Fig. 12. Here, the image data that comes at the start when the image data in each group is arranged in chronological order is selected as representative image data. Therefore, from the upper left of the display section 114, the image data is arranged in the order of image data A, image data E, image data F, image data G, and image data I.

Furthermore, in the lower right of the displayed representative image data, the total number 360 of pieces of image data belonging to the group is displayed, and the image data of a moving image is counted as one. Below the representative image data, similarly to that in Fig. 7, a total time 362 of the group, for example, 9:00 - 9:04, which is the total time of the image data A to D in the case of group 1, is displayed. In addition, a group icon, group information, and the like can be displayed.

Furthermore, in the lower right of the display section 114, a current value 370 of the predetermined time interval that is set in advance or reset by the interval setter 136, is displayed. In the left side of the display section 114, the position display section 132 allows the display of the scroll bar 372 indicating the current display position and the current ratio in the image data group or the group. The position and the ratio may be displayed using a scroll bar or may be displayed using a numeral.

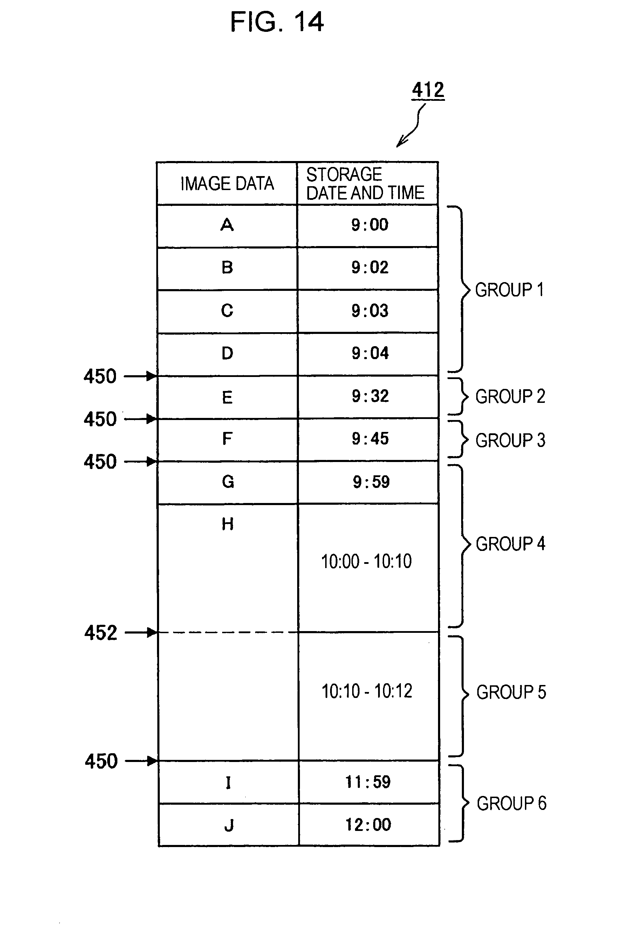

Fig. 14 is a list of image data groups that can be displayed on the display section 114. An image data group list 412 also contains image data H formed of a moving image. Here, the predetermined time interval is also 10 minutes.

In the case of the image data group list 412 shown in Fig. 14, processing proceeds in such a manner that the entirety of the image data of the moving image is divided every predetermined time interval, that is, is divided into frames having a predetermined time duration, and the moving image for each divided frame is assumed as one still image. Therefore, as the time duration of the moving image increases, the number of frames increases, and the number of image data for which grouping is performed increases in proportion to the increase. In the example shown in Fig. 14, the image data H that is a moving image has a duration of 12 minutes and is logically divided into a plurality of frames on the basis of the predetermined time interval of 10 minutes. Here, the predetermined time interval during which image data is divided into frames can take a value different from the predetermined time interval used for grouping.

In the manner described above, in addition to the four places between the image data DE, between the image data EF, between the image data FG, and between the image data HI, the places 450 where the time intervals between the storage dates and times are 10 minutes or more include a place 452 between the frames of the image data. When the place is set as the division point of the image data group, the group generator 124 generates six groups of image data A to D (group 1), image data E (group 2), image data F (group 3), image data GH (group 4), image data H (group 5), and image data IJ (group 6). The two frames of the image data H are assumed as a still image in the grouping for the sake of convenience, but actually, a still image is not reproduced.

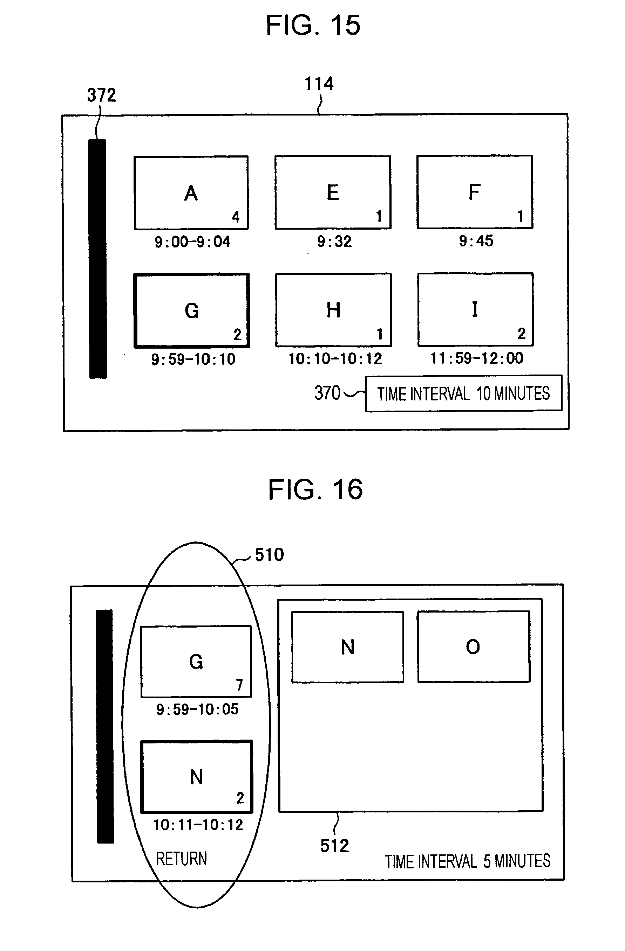

Fig. 15 is an exterior view showing the screen of the display section 114. The representative image data selector 126 selects, as representative image data, at least one piece of image data from each group, which is grouped by the group generator 124 in Fig. 14. Here, image data that comes at the start when the image data in each group is arranged in chronological order is selected as representative image data. Therefore, from the upper left of the display section 114, the image data is arranged in the order of image data A, image data E, image data F, image data G, image data H (a still image obtained in 10 minutes after the beginning of the moving image H), and image data I.

### (Another Display of Image Data)

Next, a description will be given of another specific display of image data or representative image data. In the display, a plurality of hierarchical levels are displayed on the display section 114 at one time.

Fig. 16 is an exterior view showing the screen of the display section 114 when a two-level hierarchy is displayed. Basically, the same level of the hierarchy as that displayed on the display section 114 shown in Fig. 9 is shown. The difference between the screen of Fig. 16 and the screen of Fig. 9 is that the level of the hierarchy below that of the group in which the cursor is currently positioned allowing selection of the group is also displayed at the same time.

The representative image data selector 126 selects, as representative image data, at least one piece of image data from each group, which is grouped by the group generator 124 in Fig. 8. Image data that comes at the start when the image data in each group is arranged in chronological order is selected as representative image data. Therefore, in a first area 510 of the display section 114, the image data is arranged in the order of the image data G and the image data N from the top. Since the image data N that is representative image data is in a selectable state in the first area 510, in a second area 512 of the display section 114, the image data N and the image data O are displayed from the upper left. By displaying a plurality of hierarchical levels in this manner at the same time, it is possible to select the representative image data in the higher hierarchical level while confirming the lower hierarchical level. Therefore, it becomes easier for the user to locate desired image data.

When the image data N that is the representative image data is actually selected, the group of the image data that has been in the second area 512 until now is moved to the first area 510.

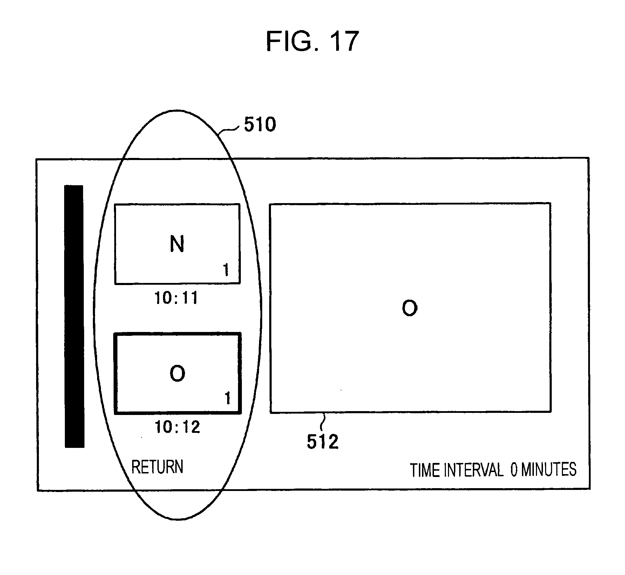

Fig. 17 is an exterior view showing the screen of the display section 114 when a two-level hierarchy is displayed similarly to that in Fig. 16. In Fig. 16, the image data N and the image data O that had been in the second area 512 has been moved to the first area 510. Here, the image data N and the image data O are displayed as representative image data. Since such a group is formed of only one image data, the level of the hierarchy below that of this group has only one image data. Therefore, since the image data O that is representative image data in the first area 510 of Fig. 17 is in a selectable state, the thumbnail of the still image of the image data O is displayed in the full area of the second area 512.

Here, a two-level hierarchy has been described as an example of displaying a plurality of hierarchical levels. The present invention is not limited to such a case, and a larger number of hierarchical levels may be displayed at the same time.

A computer program for enabling the image display apparatus 100 to function is also provided.

### (Second Embodiment: Image Display Method)

Next, a description will be given below of an image display method for displaying existing image data formed of a still image or a moving image.

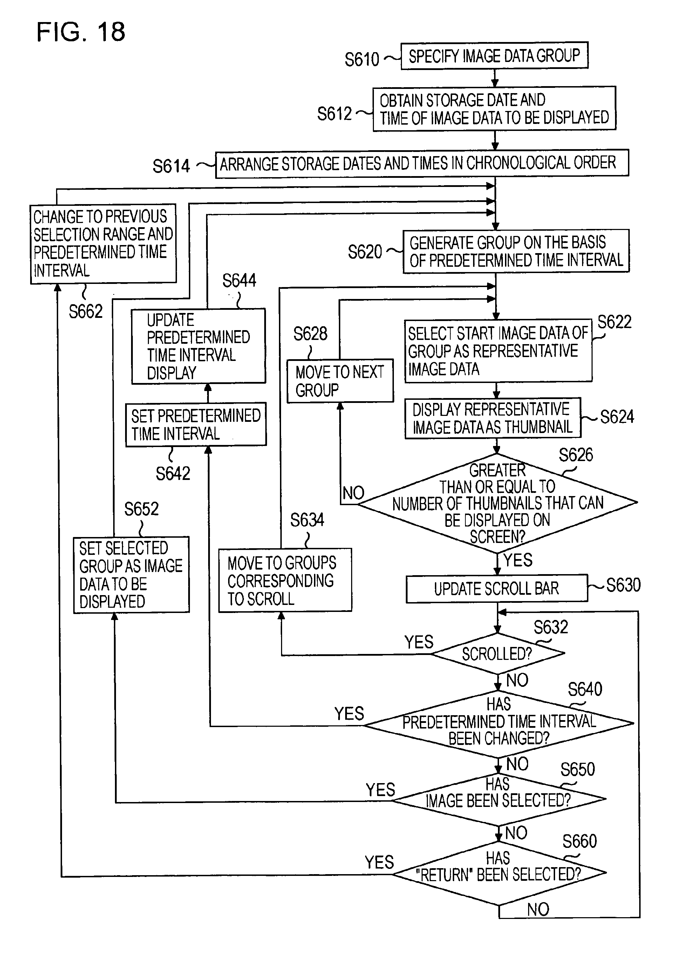

Fig. 18 is a flowchart showing in detail an image display method according to this embodiment. In the image display method, a user specifies a group of image data in order to specify an image data group, which is a group of image data, in response to a request for the specification (S610). The image display apparatus 100 obtains, from the image data, image-capturing date and time or the storage date and time in each image data of an image data group to be displayed, which is specified in this manner (S612), and rearranges the image data in the order of the obtained image-capturing dates and times or storage dates and times in the image display apparatus 100 (S614).

When the list of the image data is completed in the above-described procedure, a group is generated on the basis of a predetermined time interval about image capturing or storage (S620). Here, a series of image data for each of which the time interval between the image-capturing start dates and times or the storage start dates and times is within a predetermined time interval, for example, 10 minutes, in the image data group specified in the data group specifying step (S610), is grouped together.

Next, at least one piece of image data in the group generated in the group generation step (S620) is selected as representative image data (S622). Here, the image data at the start of the group is selected as representative image data. Alternatively, intermediate image data or image data at the end can also be selected without being limited to the image data at the start. At any rate, it is preferable that image data with which the content of the group can be easily understood be selected. The selected representative image data is displayed as a thumbnail on the display section 114 (S624).

Since the display section 114 can only display a limited number of thumbnails, it is confirmed whether or not the number of thumbnails that can be displayed on the screen have already been displayed (S626). If the number of thumbnails that can be displayed has not yet been reached, an object to be displayed is moved to the next group (S628), and processing is repeated from the representative image data selection step (S622). If the number of thumbnails that can be displayed has been reached, the position and the ratio in the image data group or the group, of a plurality of pieces of representative image data displayed in the image data display step (S624) are displayed as a scroll bar (S630).

Here, in order to extract desired image data, it is possible for the user to display the desired groups by moving the scroll bar and to change the size of the group by changing the predetermined time interval.

The image display apparatus 100 detects presence or absence of a scroll request from the user (S632). When there is a scroll request, the focus is moved to groups corresponding to the scrolling (S634), and a reprocess is performed from a representative image data selection step (S622) with respect to the moved groups. When there is no scroll request from the user, next, presence or absence of the change of the predetermined time interval is detected (S640). Here, the change of the predetermined time interval is performed using zoom keys provided in the image display apparatus 100, and the predetermined time interval is shortened linearly using a zoom direction switch. When there is a request for the change of the predetermined time interval, the predetermined time interval is reset in the image display apparatus 100 (S642), and the display of the predetermined time interval on the display section 114 is updated (S644). When there is no request for the change of the predetermined time interval, the process proceeds to the next step.

In the manner described above, when the desired group or image data can be displayed on the screen, the user selects the group or the image data (S650). The group or the image data selected by the user is assumed as image data to be displayed (S652). If it is a group, a group in a level lower than the current hierarchical level is further displayed. If it is single image data (final image data), an image is reproduced. The group in a lower hierarchical level is displayed by performing a reprocess from the group generation step (S620) using the predetermined time interval that is shortened at a predetermined ratio.

In addition, when the selected group is not a desired group, it is possible to return to the group in the level one level higher than the current level of the hierarchy by selecting "Return" (S660). When "Return" is selected, the selection range and the predetermined time interval are changed (returned) to the previous selection range and the previous predetermined time interval (of the level one level higher than the current level) (S662). When "Return" is not selected, a state of waiting for a request from the user is looped.

In the above-described image display method, image data for which time intervals between image-capturing start dates and times or the storage start dates and times are within a predetermined time interval is assumed as image data that has been image-captured or stored in the same environment or situation, and is grouped at the time of display. Therefore, in a state in which image data has been stored, it is not necessary to perform grouping in advance.

### (Modification 1)

It is also possible for the group generator 124 to group pieces of image data for each of which the time interval from the image-capturing end date and time or the storage end date and time of the consecutive image data to the image-capturing start date and time or the storage start date and time in the image data group specified by the data group specifier 122 is within a predetermined time interval.

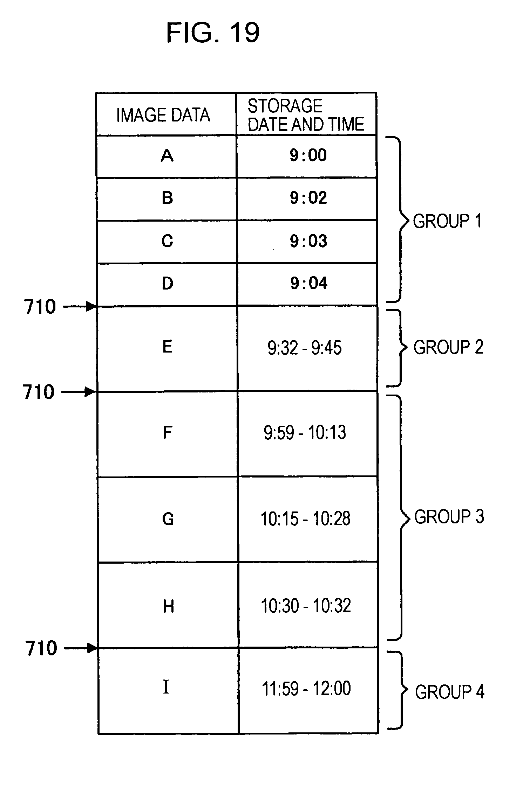

Fig. 19 is a list of image data groups that can be displayed on the display section 114. Here, the image data is consecutively arranged in chronological order, and the storage date and time interval of the image data is known from the storage date and time attached to each image data. The fact that the list contains moving image data is identical to that in Fig. 12. The groups in Fig. 12 are generated on the basis of only the time intervals between the image-capturing dates and times (image-capturing start dates and times) and the storage dates and times (storage start dates and times). The difference between this embodiment and that in Fig. 12 is that the group is generated on the basis of the time interval between the moving image data. Here, also, the predetermined time interval is set as 10 minutes.

It can be seen that there are three places 710 at which the time interval between the storage dates and times is 10 minutes or more, that is, between the image data DE, between the image data EF, and between the image data HI. When the places are set as division points of the image data group, it is possible for the group generator 124 to generate four groups, that is, image data A to D (group 1), the image data E (group 2), image data F to H (group 3), and image data I (group 4).

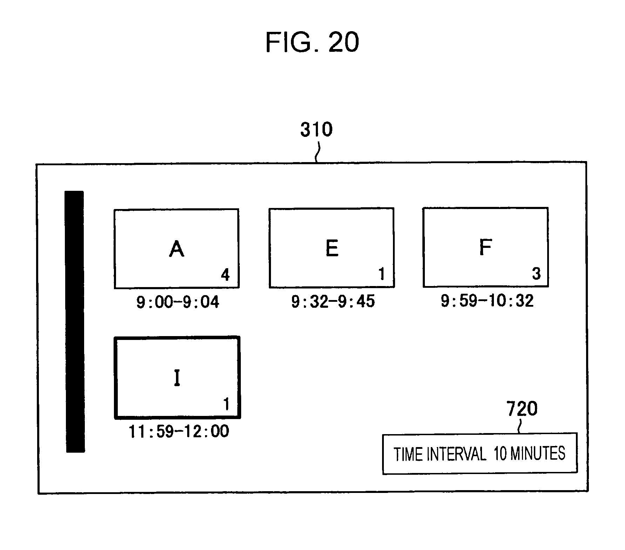

Fig. 20 is an exterior view showing the screen of the display section 114 of the image display apparatus 100 according to this embodiment. The representative image data selector 126 of the image display apparatus 100 selects, as representative image data, at least one piece of image data from each group, which is grouped by the group generator 124. Here, image data that comes at the start when the image data in each group is arranged in chronological order is selected as representative image data. Therefore, from the upper left of the display section 114, image data is arranged in the order of the image data A, the image data E, the image data F, and the image data I. As a result of the above-described display, even if a large number of image data exist in an image data group, it becomes possible to understand the entirety thereof by only displaying a small number of representative image data.

Furthermore, similarly to that in Fig. 7, in the lower right of the representative image data, the total number of pieces of the image data belonging to the group is displayed. Below the representative image data, a total time of the group, for example, 9:00 - 9:04, which is the total time of the image data A to D, is displayed in the case of group 1. In addition, it is also possible to display a group icon, group information, and the like.

In addition, in the lower right of the display section 114, a current value 720 of the predetermined time interval that is set in advance or reset by the interval setter 136 is displayed. In the left side of the display section 114, the position display section 132 allows the display of a scroll bar indicating the current display position and ratio in the image data group or the group. The position and the ratio may be displayed using a scroll bar or may be displayed using a numeral.

### (Modification 2)

It is also possible for the group generator 124 to group a series of image data for which image-capturing start dates and times or the storage start dates and times are within a predetermined time range in the image data group specified by the data group specifier 122.

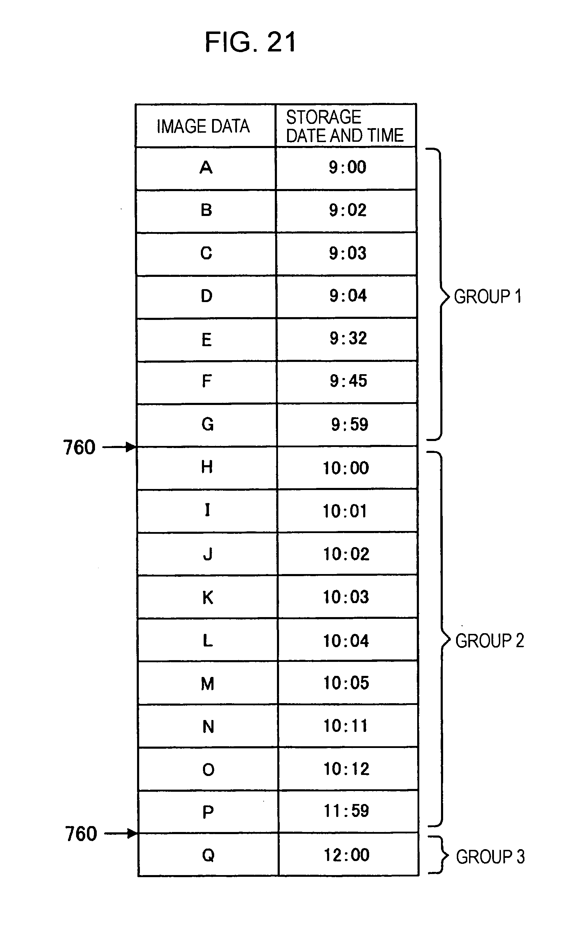

Fig. 21 is a list of image data groups that can be displayed on the display section 114. Here, the image data is consecutively arranged in chronological order. The time interval between the storage dates and times of the image data is known from the storage date and time attached to each image data. In the list, a group is generated on the basis of only the image-capturing date and time (image-capturing start date and time) or the storage date and time (storage start date and time), and all the image data for which image-capturing dates and times or the storage dates and times are within a predetermined range, for example, within 2 hours, is grouped.

In the case of the above-described list, the predetermined time range is divided into 8:00 to 10:00, 10:00 to 12:00, and 12:00 to 14:00, and image data stored at a date and time between the groups, for example, stored at 10:00, is allocated to the group of the latter (10:00 to 12:00). As a result, there are two division points 760 between the image data GH and between the image data PQ. It is possible for the group generator 124 to generate three groups of image data A to G (group 1), image data H to P (group 2), and image data Q (group 3).

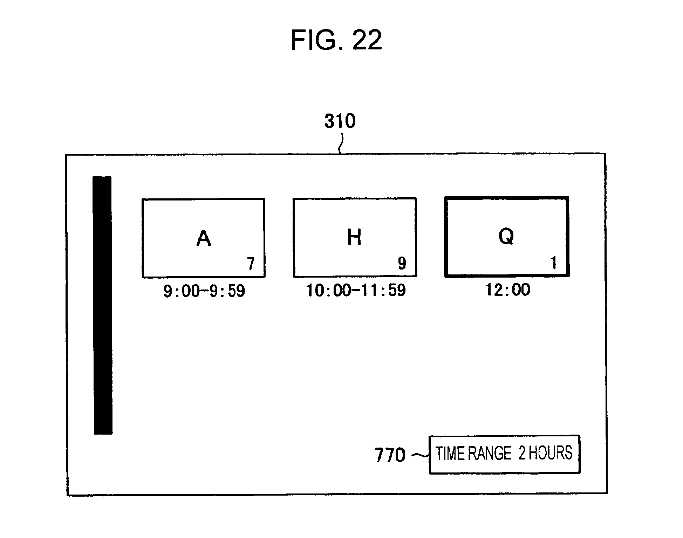

Fig. 22 is an exterior view showing the screen of the display section 114 of the image display apparatus 100 according to this embodiment. The representative image data selector 126 of the image display apparatus 100 selects, as representative image data, at least one piece of image data from each group, which is grouped by the group generator 124. For example, the image data at the start is selected as representative image data. Therefore, from the upper left of the display section 114, the image data is arranged in the order of the image data A, the image data H, and the image data Q.

In addition, in the lower right of the display section 114, a current value 770 of the predetermined time range (time range) that is set in advance or reset by the interval setter 136 is displayed.

### (Modification 3)

It is also possible for the group generator 124 to group pieces of image data for each of which the image-capturing position or the storage position is within a predetermined position range in the image data group specified by the data group specifier 122.

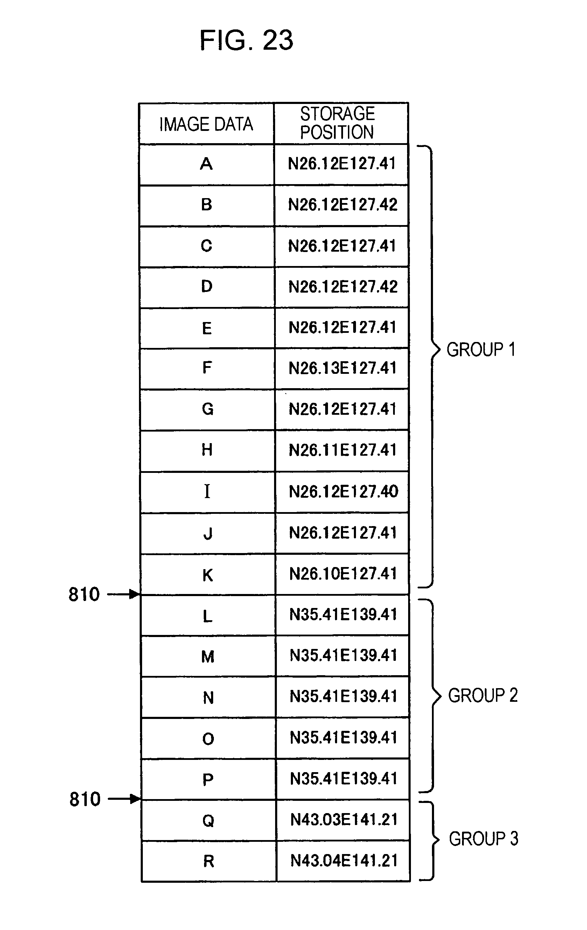

Fig. 23 is a list of image data groups that can be displayed on the display section 114. Here, in each image data, image-capturing positions in the Earth, which are obtained using a GPS or the like, or storage positions are consecutively arranged in ascending order, and each image-capturing position or each storage position is attached to each image data. In the list, a group is generated on the basis of whether or not the image-capturing position or the storage position is within a predetermined range that is set in advance.

In the case of the above-described list, the predetermined range is divided into an area of N26.12E127.41 (Naha area), an area of N35.41E139.41 (Tokyo area), and an area of N43.03E141.21 (Sapporo area). As a result, there are two division points 810, that is, between the image data KL and between the image data PQ. It is possible for the group generator 124 to generate three groups of image data A to K (group 1), image data L to P (group 2), and image data QR (group 3).

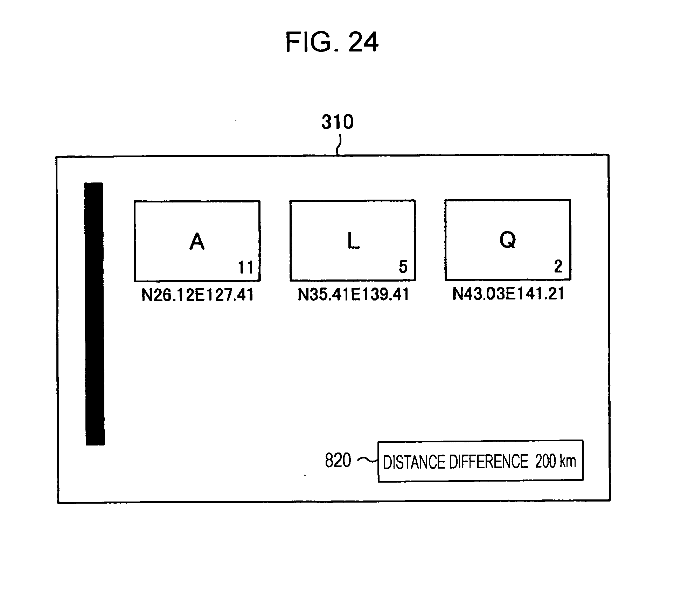

Fig. 24 is an exterior view showing the screen of the display section 114 of the image display apparatus 100 according to this embodiment. Here, the image data at the start is selected as the representative image data of the group, and from the upper left of the display section 114, the image data is arranged in the order of the image data A, the image data L, and the image data Q.

In addition, in the lower right of the display section 114, a current value 820 of the predetermined range that is set in advance or reset by the interval setter 136 is displayed. In this embodiment, the image data is grouped by assuming image data for which the distance difference in place of the predetermined range is 200 km or more as image data that has been image-captured or stored in the same environment or situation.

### (Modification 4)

It is also possible for the group generator 124 to group pieces of image data for each of which the image-capturing altitude or the storage altitude is within a predetermined altitude range in the image data group specified by the data group specifier 122.

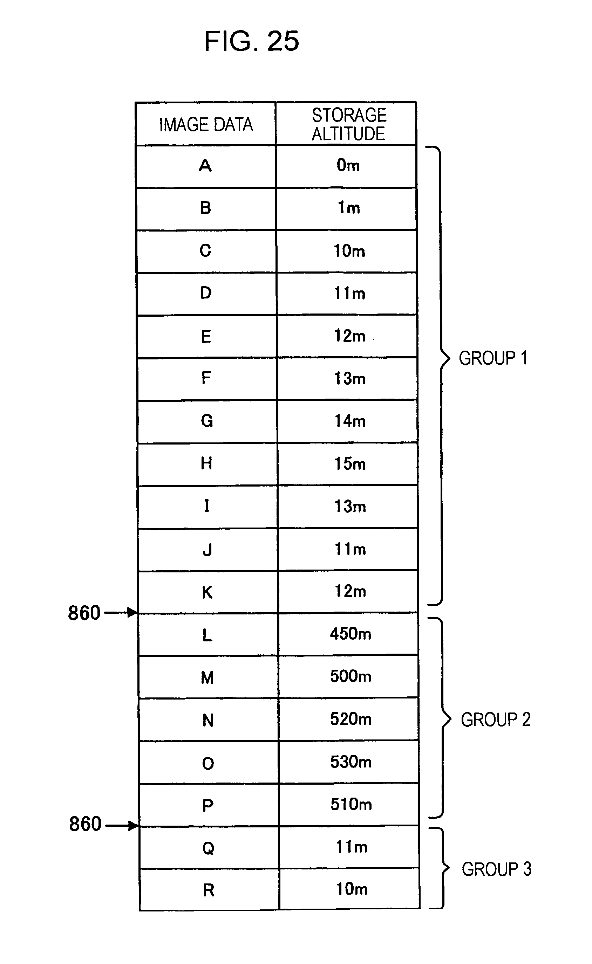

Fig. 25 is a list of image data groups that can be displayed on the display section 114. Here, in each image data, image-capturing altitudes in the Earth, which are obtained using a GPS or the like, or the storage altitudes are consecutively arranged in the order of image capturing or storage, and the image-capturing altitude or the storage altitude is attached to each image data. In the list, a group is generated on the basis of whether or not the image-capturing altitude or the storage altitudes are within a predetermined range that is set in advance.

In the case of the above-described list, image data is divided at a place where the predetermined altitude has a difference of 200 m or more. As a result, there are two division points 860, that is, between the image data KL and between the image data PQ. The group generator 124 generates three groups of image data A to K (group 1), image data L to P (group 2), and image data QR (group 3).

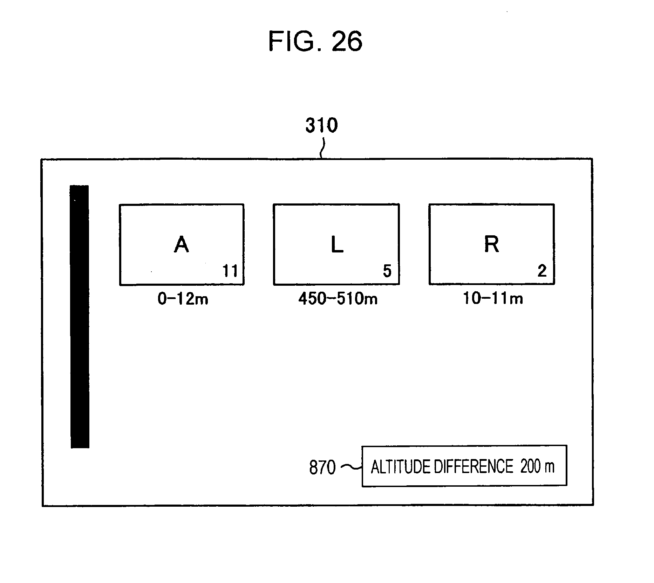

Fig. 26 is an exterior view showing the screen of the display section 114 of the image display apparatus 100 according to this embodiment. Here, the image data at the start is selected as the representative image data of the group, and from the upper left of the display section 114, the image data is arranged in the order of image data A, image data L, and image data Q.

In addition, in the lower right of the display section 114, a current value 870 of the predetermined altitude that is set in advance or reset by the interval setter 136 is displayed. In this embodiment, the image data is grouped by assuming image data for which the altitude differences in place of the predetermined altitude are 200 m or more as image data that has been image-captured or stored in the same environment or situation.

### (Modification 5)

It is also possible for the group generator 124 to group pieces of image data for each of which the movement speed at the time of image capturing or storage is within a predetermined speed range in the image data group specified by the data group specifier 122.

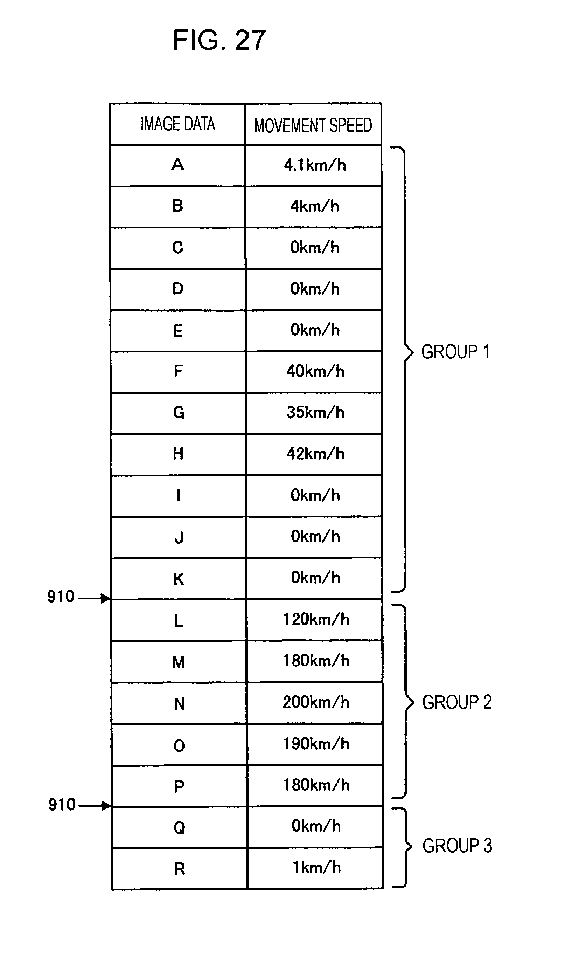

Fig. 27 is a list of image data groups that can be displayed on the display section 114. Here, each image data is consecutively arranged in the order of image capturing or storage. The image-capturing speed or the movement speed can be calculated on the basis of the position and the time, which are obtained by a position measurement system such as a GPS, and it is attached to each image data. In the list, a group is generated on the basis of whether or not the image-capturing speed or the storage speed is within a predetermined range that is set in advance.

In the case of the above-described list, image data is divided at a place where a difference in the predetermined speed is 100 km/h or more. As a result, there are two division points 910, that is, between the image data KL and between the image data PQ. It is possible for the group generator 124 to generate three groups of image data A to K (group 1), image data L to P (group 2), and image data QR (group 3).

Fig. 26 is an exterior view showing the screen of the display section 114 of the image display apparatus 100 according to this embodiment. Here, the image data at the start is selected as the representative image data of the group, and from the upper left of the display section 114, the image data is arranged in the order of image data A, image data L, and image data Q.

In addition, in the lower right of the display section 114, a current value 920 of the predetermined speed that is set in advance or reset by the interval setter 136 is displayed. In this embodiment, the image data is grouped by assuming image data for which the difference in speed in place of the predetermined speed is 100 km/s or more as image data that has been image-captured or stored in the same environment or situation.

According to the embodiment described in the above-described modification, it becomes possible to perform grouping from the various viewpoints, making it possible to more easily search for target image data.

The date and time, the position, the altitude, and the speed (movement speed) regarding image capturing or storage used for the grouping are read at a high speed, and each parameter is easily changed by the interval setter 136. Therefore, the searching efficiency can be improved.

In order to perform grouping using the date and time, the position, the altitude, and the speed (movement speed) regarding image capturing or storage, each image data is stored in such a manner that a date and time stamp and a position stamp are attached thereto, or is stored in such a manner as to be associated with another file.

In the foregoing, although the preferred embodiments of the present invention have been described with reference to the attached drawings, of course, the present invention is not limited to such embodiments. It is self-explanatory that a person skilled in the art can conceive various modifications or alterations. It is understood that the modifications or alterations fall within the technological scope of the present invention.

For example, in the above-described modifications, grouping using date and time, the position, the altitude, and the speed (movement speed) regarding image capturing or storage has been described. Such grouping is performed singly for each image display apparatus, and also, which one of the date and time, the position, the altitude, and the speed is used can be selected at the time of grouping. At this time, date and time information and position (including altitude) information are associated with each image data. Image data may also be grouped by combining two or more of the date and time, the position, the altitude, and the speed (movement speed) regarding image capturing or storage. In addition, image data can also be grouped on the basis of an image capturing or storage direction or on the basis of a dominant color when the captured image data is filtered.

Even if the image data group is files in a list form, grouping can be performed if date and time information or position information is associated therewith. In this case, groups can also be displayed using file names.

### Industrial Applicability

The present invention can be applied to an image display apparatus for displaying existing image data, an image display method for use therewith, and a computer program for use therewith.

## Claims

1. An image display apparatus for displaying existing image data formed of a still image and a moving image, the image display apparatus comprising:
a data group specifier configured to specify at least one of image data groups that are groups of pieces of the image data in response to a request from a user;
a group generator configured to group pieces of the image data for each of which image-capturing start date and time or storage start day and time are within a predetermined time interval, in the specified image data group;
a representative image data selector configured to select at least one piece of image data in the group generated by the group generator as representative image data; and
an image data display section configured to display representative image data for each of the groups as a thumbnail on a display section.

2. The image display apparatus according to Claim 1, further comprising:
a group selector configured to select a group to which the representative image data displayed on the display section belongs in response to a request from the user,
wherein, after the group is selected,
the group generator shortens the predetermined time interval at a predetermined ratio and newly performs grouping in the selected group on the basis of the shortened predetermined time interval, and
the image data display section displays representative image data for each of the newly formed groups as a thumbnail on the display section.

3. The image display apparatus according to Claim 1, further comprising:
an interval setter for setting the predetermined time interval in response to a request from the user,
wherein the group generator newly performs grouping on the basis of the set predetermined time interval.

4. The image display apparatus according to Claim 3, further comprising:
an image-capturing section configured to capture a still image or a moving image; and
zoom keys or direction keys used in the image capturing,
wherein the interval setter changes the predetermined time interval by using the zoom keys or the direction keys.

5. The image display apparatus according to Claim 3, further comprising:
an interval display section configured to display the set predetermined time interval.

6. The image display apparatus according to Claim 1, wherein, when the image data is moving image data, the group generator generates a group containing at least one still image obtained from the image data.

7. The image display apparatus according to Claim 1, wherein, when the image data is moving image data, the group generator divides the moving image every predetermined time interval, and generates a group containing at least one still image of the divided moving image obtained from the image data in each divided frame.

8. The image display apparatus according to Claim 1, further comprising:
a position display section configured to display a position and a ratio in the image data groups or the group of a plurality of pieces of representative image data displayed on the display section.

9. The image display apparatus according to Claim 1, further comprising:
an image data storage section configured to store the image data,
wherein the data group specifier specifies all the image data in an image data storage section as an image data group.

10. The image display apparatus according to Claim 1, wherein the image data display section displays the representative image data and also one or more pieces of information selected from the total time of a group to which the representative image data belongs, the total number of pieces of image data, a group icon, and group information.

11. A computer program for displaying existing image data formed of a still image or a moving image, the computer program enabling a computer to function as:
a data group specifier configured to specify at least one of image data groups that are groups of pieces of the image data in response to a request from a user;
a group generator configured to group pieces of the image data for each of which image-capturing start date and time or storage start day and time is within a predetermined time interval in the specified image data group;
a representative image data selector configured to select at least one piece of image data in the group generated by the group generator as representative image data; and
an image data display section configured to display representative image data for each of the groups as a thumbnail on a display section.

12. An image display apparatus for displaying existing image data formed of a still image or a moving image, the image display apparatus comprising:
a data group specifier configured to specify at least one of image data groups that are groups of pieces of the image data in response to a request from a user;
a group generator configured to group pieces of image data for each of which the time interval from the image-capturing end date and time or the storage end date and time of consecutive image data to the image-capturing start date and time or the storage start date and time in the specified image data group is within a predetermined time interval;
a representative image data selector configured to select at least one piece of image data in the group generated by the group generator as representative image data; and
an image data display section configured to display representative image data for each of the groups as a thumbnail on a display section.

13. An image display apparatus for displaying existing image data formed of a still image or a moving image, the image display apparatus comprising:
a data group specifier configured to specify at least one of image data groups that are groups of pieces of the image data in response to a request from a user;
a group generator configured to group pieces of image data for each of which image-capturing start date and time or storage start date and time is within a predetermined time interval range in the specified image data group;
a representative image data selector configured to select at least one piece of image data in the group generated by the group generator as representative image data; and
an image data display section configured to display representative image data for each of the groups as a thumbnail on a display section.

14. An image display apparatus for displaying existing image data formed of a still image or a moving image, the image display apparatus comprising:
a data group specifier configured to specify at least one of image data groups that are groups of pieces of image data in response to a request from a user;
a group generator configured to group pieces of group image data for each of which the image-capturing position or the storage position is within a predetermined position range in the specified image data group;
a representative image data selector configured to select at least one piece of image data in the group generated by the group generator as representative image data; and
an image data display section configured to display representative image data for each of the groups as a thumbnail on a display section.

15. An image display apparatus for displaying existing image data formed of a still image or a moving image, the image display apparatus comprising:
a data group specifier configured to specify at least one of image data groups that are groups of pieces of the image data in response to a request from a user;
a group generator configured to group pieces of image data for each of which the image-capturing altitude or the storage altitude is within a predetermined altitude range in the specified image data group;
a representative image data selector configured to select at least one piece of image data in the group generated by the group generator as representative image data; and
an image data display section configured to display representative image data for each of the groups as a thumbnail on a display section.

16. An image display apparatus for displaying existing image data formed of a still image or a moving image, the image display apparatus comprising:
a data group specifier configured to specify at least one of image data groups that are groups of pieces of the image data in response to a request from a user;
a group generator configured to group pieces of image data for each of which the movement speed at image capturing time or at storage time is within a predetermined speed range in the specified image data group;
a representative image data selector configured to select at least one piece of image data in the group generated by the group generator as representative image data; and
an image data display section configured to display representative image data for each of the groups as a thumbnail on a display section.

17. An image display method for displaying existing image data formed of a still image or a moving image, the image display method comprising:
a data group specification step of specifying at least one of image data groups that are groups of pieces of the image data in response to a request from the user;
a group generation step of grouping a series of image data for each of which image-capturing start date and time or storage start date and time is within a predetermined time interval in the specified image data group;
a representative image data selection step of selecting at least one piece of image data in the group generated in the group generation step as representative image data; and
an image data display step of displaying representative image data for each of the groups as a thumbnail on a display section.

18. The image display method according to Claim 17, further comprising:
a group selection step of selecting a group to which the representative image data displayed on the display section belongs in response to a request from the user,
wherein, after the group is selected,
the group selection step shortens the predetermined time interval at a predetermined ratio and newly performs grouping in the selected group on the basis of the shortened predetermined time interval, and
the image data display step displays representative image data for each of the newly formed groups as a thumbnail on the display section.

19. The image display method according to Claim 17, further comprising an interval setting step of setting the predetermined time interval,
wherein the group generation step newly performs grouping on the basis of the set predetermined time interval.

20. The image display method according to Claim 19, further comprising an interval display step of displaying the set predetermined time interval.

21. The image display method according to Claim 17, wherein, when the image data is moving image data, the group generation step generates a group containing at least one still image obtained from the image data.

22. The image display method according to Claim 17, wherein, when the image data is moving image data, the group generation step divides the moving image every predetermined time interval, and generates a group containing at least one still image of the divided moving image as image data in each divided frame.

23. The image display method according to Claim 17, further comprising a position display step of displaying a position and a ratio of a plurality of pieces of representative image data displayed in the display step in the image data group or the group.

24. The image display method according to Claim 17, wherein the data group specification step specifies all the image data in an image data storage section in which the image data is stored as an image data group.

25. The image display method according to Claim 17, wherein the image data display step displays the representative image data and also one or more pieces of information selected from the total time of a group to which the representative image data belongs, the total number of pieces of image data, a group icon, and group information.

## Amended claims

### Amended claims under Art. 19.1 PCT

1. An image display apparatus for displaying image data formed of a still image or a moving image, the image display apparatus comprising:
storage means for storing the image data;
a data group specification section configured to specify at least one of image data groups that are groups of pieces of the image data stored in the storage device;
a group generator configured to group a series of image data for each of which the interval between the image-capturing start dates and times or the storage start dates and times of the image data in the specified image data group is within a predetermined time interval;
a representative image data selector configured to select at least one piece of image data in the group generated by the group generator; and
an image data display section configured to display representative image data for each of the groups as a thumbnail on a display section.

2. The image display apparatus according to Claim 1, further comprising:
a group selector configured to select a group to which the representative image data displayed on the display section belongs,
wherein, after the group is selected,
the group selector shortens the predetermined time interval at a predetermined ratio and newly performs grouping in the selected group on the basis of the shortened predetermined time, and
the image data display section displays, as a thumbnail, representative image data for each of the newly formed groups on the display section.

3. The image display apparatus according to Claim 1, further comprising:
an interval setter configured to set the predetermined time interval,
wherein the group selector newly performs grouping on the basis of the set predetermined time interval.

4. The image display apparatus according to Claim 3, further comprising:
an image-capturing section configured to capture a still image or a moving image; and
zoom keys or direction keys used for the image capturing,
wherein the interval setter changes the predetermined time interval by using the zoom keys or the direction keys.

5. The image display apparatus according to Claim 3,
